# EUROPÄISCHE PATENTANMELDUNG

(11) **EP 1 386 782 A1**
(43) Veröffentlichungstag der Anmeldung: **04.02.2004**
(21) Anmeldenummer: 03400021.6
(22) Anmeldetag: 16.05.2003
(51) Int. Cl.: B60Q 1/48

(54) **Fahrzeugumfeldüberwachungssystem und Verfahren hierfür**

(30) Priorität: 30.07.2002 DE 10234574
(71) Anmelder: Valeo Schalter und Sensoren GmbH, 74321 Bietigheim-Bissingen (DE)
(72) Erfinder: Heimberger, Markus, 71732 Tamm (DE); Gotzig, Heinrich, 74081 Heilbronn (DE)
(74) Vertreter: Bulling, Alexander, Dr.

(57) **Zusammenfassung**

Fahrzeugumfeldüberwachungssystem sowie Verfahren zum Betreiben eines Fahrzeugumfeldüberwachungssystems zur Überwachung des Nahbereichs eines Fahrzeuges (1), mit den Nahbereich des Fahrzeuges (1) erfassenden Sensoren (2), mit einem die von den Sensoren (2) erfassten Werte auswertenden Steuer- und/oder Regelgerät (3) und mit mindestens einem von dem Steuer- und/oder Regelgerät (3) ansteuerbaren Signalgeber (4) zur Erzeugung eines Warnsignals, wobei der Signalgeber (4) ein akustischer Signalgeber ist und wobei mit dem Steuer- und/oder Regelgerät (3) ein erstes akustisches Signal (A) zum Angeben des relativen Abstandes zu einem erfassten Objekt (5) und ein zweites akustisches Signal (Bl) zum Angeben der Position des erfassten Objekts in Bezug auf das Fahrzeug (1) erzeugbar sind.

## Beschreibung

Die Erfindung betrifft ein Fahrzeugumfeldüberwachungssystem für ein Fahrzeug, insbesondere für ein Personenkraftfahrzeug, mit den Merkmalen des Oberbegriffs des Patentanspruchs 1 sowie ein Verfahren zum Betreiben eines Fahrzeugumfeldüberwachungssystems mit den Merkmalen des Oberbegriffs des Anspruchs 7.

Moderne Fahrzeuge weisen Fahrzeugumfeldüberwachungssysteme auf zur Erfassung und Überwachung des Nahbereichs des Fahrzeuges, um dem Fahrer eine Einparkhilfe oder dergleichen bereitzustellen. Derartige Systeme zur Fahrzeugumfeldüberwachung und Verfahren zum Betreiben der Fahrzeugumfeldüberwachungssysteme weisen eine Mehrzahl von Sensoren auf, die an dem äußeren Umfang des Fahrzeuges angeordnet sind. Über die Sensoren können Objekte im Nahbereich des Fahrzeuges erfasst werden, und mittels einem über ein Steuer- und/oder Regelgerät angesteuerten Signalgeber wird dem Fahrer im Fahrzeug-Inneren ein Warnsignal bereitgestellt, durch welches es ihm ermöglicht wird, ohne Kollision mit dem Objekt im Nahbereich des Fahrzeuges möglichst nah an dieses heranzugelangen. Bei den herkömmlich bekannten Systemen erhält der Fahrer entweder ein akustisches oder ein grafisches bzw. optisches Warnsignal, d.h. einen Warnton oder -tonfolge oder eine bildliche Anzeige eines Displays oder dergleichen.

Bei einem akustischen Warnsignal wird in den bekannten Systemen zum Beispiel über die Geschwindigkeit einer Aufeinanderfolge von Signaltönen dem Fahrer die relative Nähe zu dem Objekt im Nahbereich des Fahrzeuges signalisiert. Bei einer abnehmenden Distanz zu dem Objekt wird die Geschwindigkeit der Tonfolge zum Beispiel erhöht. Nachteilig ist hierbei, dass der Fahrer lediglich eine Warnung über das Vorliegen und den Abstand zu einem Objekt erhält, jedoch die relative Position zu dem Objekt dem Fahrer auf diese Weise nicht mitgeteilt werden kann.

Alternativ ist es möglich, die Werte der Sensoren hinsichtlich der Erfassung von Objekten im Nahbereich des Fahrzeuges durch ein Steuergerät in eine grafische Anzeige im Innern des Fahrzeuges umzuwandeln, so dass der Fahrer nicht nur den relativen Abstand zum Objekt, sondern auch die Position des Objektes in Bezug auf das Fahrzeug durch die grafische Anzeige erhält. Nachteilig hierbei ist, dass für eine grafische Anzeige eine relativ kostspielige Anzeigeeinrichtung, wie zum Beispiel ein LCD-Display, im Innern des Fahrzeuges installiert werden muss. Außerdem wird der Fahrer durch die grafische Anzeige abgelenkt, und es besteht die Gefahr einer Kollision trotz Fahrzeugumfeldüberwachungssystem.

Die vorliegende Erfindung hat demgegenüber als Aufgabe, ein derartiges Fahrzeugumfeldüberwachungssystem sowie ein Verfahren zum Betreiben eines solchen bereitzustellen, bei welchem auf konstruktiv möglichst einfache Weise für den Fahrer durch einen akustischen Signalgeber eine möglichst genaue Warnung hinsichtlich eines erfassten Objektes im Nahbereich des Fahrzeuges erzeugt werden kann.

Diese Aufgabe wird bei dem Fahrzeugumfeldüberwachungssystem gemäß der Erfindung dadurch gelöst, dass ein akustischer Signalgeber vorgesehen ist und dass mit dem Steuerund/oder Regelgerät ein erstes akustisches Signal zum Angeben des relativen Abstandes zu einem erfassten Objekt und ein zweites akustisches Signal zum Angeben der Position des erfassten Objektes in Bezug auf das Fahrzeug erzeugbar ist. Hierdurch erhält der Fahrer des Fahrzeuges lediglich zwei akustische Signale, aus denen er einerseits den Abstand zum Objekt im Nahbereich des Fahrzeuges erhält und andererseits die Position des Objektes, das heißt ob sich das Objekt beispielsweise in der Mitte oder an einer der Seiten des Fahrzeuges befindet. Hierdurch wird die Sicherheit erhöht, da der Fahrer genaue Informationen hinsichtlich des mit dem Fahrzeug zu kollidieren drohenden Objektes erhält und er diese Information lediglich auf akustischem Wege erhält. Der Fahrer muss nicht seine Aufmerksamkeit auf eine grafische Anzeige, wie zum Beispiel ein Display im Innern des Fahrzeuges, wenden und kann seine ungeteilte Aufmerksamkeit dem Steuern des Fahrzeuges zuwenden. Der Fahrer ist somit in der Lage, auf die Warnung durch den Signalgeber des Fahrzeugumfeldüberwachungssystems zum Beispiel durch Korrigieren der Fahrtrichtung zu reagieren, da er durch das zweite akustische Signal, welches zusätzlich zu dem ersten akustischen Signal erzeugbar ist, die Information hinsichtlich der relativen Lage des störenden Objekts erhält. Nicht nur die Sicherheit wird hierdurch erhöht. Auch ist das erfindungsgemäße Fahrzeugumfeldüberwachungssystem kostengünstig und ohne großen Aufwand realisierbar, da keine aufwändigen grafischen Display-Einrichtungen erforderlich sind.

Nach einer vorteilhaften Ausgestaltung der Erfindung ist das erste akustische Signal eine Folge eines Warnsignaltons und das zweite akustische Signal eine Sprachausgabe. Hierdurch erhält der Fahrer ähnlich wie bei bekannten Fahrzeugumfeldüberwachungssystemen mit akustischem Warnsignal die Warnung hinsichtlich des Abstands zwischen Fahrzeug und störendem Objekt über eine Abfolge eines Warnsignaltons, zum Beispiel über die Geschwindigkeit einer Aufeinanderfolge von Warnsignalen. Bei Näherkommen des Objektes können beispielsweise die Abstände zwischen zwei aufeinanderfolgenden Warnsignaltönen reduziert werden. Zusätzlich erhält der Fahrer über ein zweites akustisches Signal, welches als Sprachausgabe durch das Steuerund/oder Regelgerät des Systems erzeugbar ist, eine Information hinsichtlich der relativen Position des störenden Objektes zu dem Fahrzeug. Für den Fahrer ist es somit leicht, die beiden akustischen Signale zu unterscheiden und die zum Vermeiden einer Kollision des Fahrzeuges mit dem Objekt erforderlichen Schlüsse direkt und ohne Verzögerung zu ziehen. Die ungeteilte Aufmerksamkeit des Fahrers, das heißt sein Blick, kann dessen ungeachtet in Fahrzeugrichtung bleiben, so dass das Fahrzeugumfeld vollständig abgedeckt ist und Kollisionen des Fahrzeuges sicher vermieden werden.

Nach einer weiteren vorteilhaften Ausgestaltung der Erfindung sind das erste akustische Signal und das zweite akustische Signal simultan bzw. gleichzeitig erzeugbar. Dies hat den Vorteil, dass bei Erfassen eines störenden Objektes die erforderlichen Informationen unmittelbar und ohne Verzögerung dem Fahrer weitergeleitet werden. Durch simultanes Erzeugen von beispielsweise überlagerten Arten von Signalausgaben in dem akustischen Signalgeber können somit erfindungsgemäß mehrere Informationen gleichzeitig dem Fahrer akustisch weitergeleitet werden.

Nach einer weiteren vorteilhaften Ausgestaltung der Erfindung sind in dem Steuer- und/oder Regelgerät standardisierte Sprachausgaben für die relative Position des Objektes in Bezug auf das Fahrzeug gespeichert. Je nachdem, welcher Wert von den Sensoren an das Steuerund/oder Regelgerät gegeben wird, kann so automatisch eine entsprechende Sprachausgabe erzeugt werden, welche dem Fahrer die Information hinsichtlich der Position des Objektes angibt. Nach einer diesbezüglichen vorteilhaften Ausgestaltung der Erfindung besteht die Sprachausgabe maus einer Angabe einer Fahrzeugseite und/oder eines Bereichs dieser Fahrzeugseite. Die somit standardisierte Sprachausgabe kann beispielsweise lauten: "Hinten-rechts", "Vorne - Mitte" usw. Durch eine relativ kurze Sprachausgabe erhält der Fahrer somit unmittelbar bei Erfassen eines Objektes, das mit dem Fahrzeug zu kollidieren droht, die Information auch über die Position des Objektes. Somit kann der Fahrer entsprechend reagieren, auch wenn sich das störende Objekt außerhalb des von dem Fahrersitz einsehbaren Bereichs im Nahbereich des Fahrzeuges befindet.

Nach einer weiteren vorteilhaften Ausgestaltung der Erfindung ist der Abstand zu dem Objekt über eine zeitliche Abfolge zwischen zwei aufeinanderfolgenden Warnsignaltönen angebbar. Somit kann auch bei Überlagerung des ersten und des zweiten akustischen Signals eine genaue Trennung der Informationen durch den Fahrer vorgenommen werden, da die eine Information in der Abfolge eines ersten Signaltons enthalten ist, wohingegen die zweite Information zum Beispiel in einer Sprachausgabe enthalten sein kann.

Die Aufgabe wird auch durch das Verfahren zum Betreiben eines Fahrzeugumfelderfassungssystems mit den Merkmalen des Anspruchs 7 gelöst. Bei dem erfindungsgemäßen Verfahren zum Betreiben eines Fahrzeugumfelderfassungssystems wird mittels eines Steuer- und/oder Regelgerätes in Antwort auf von Sensoren erfasste Werte ein akustischer Signalgeber angesteuert zum Erzeugen eines Warnsignals, wobei ein erstes akustisches Signal erzeugt wird zum Angeben des relativen Abstandes eines detektierten Objektes zum Fahrzeug und ein zweites akustisches Signal erzeugt wird zum Angeben der Position des Objektes in Bezug zu dem Fahrzeug. Hierdurch erhält der Fahrer allein auf akustischem Weg eine Signalausgabe, welche in einer einzigen oder in getrennten Signalerzeugungseinrichtungen erzeugt wird, einerseits die Information über eine Annäherung eines Objektes und andererseits auch eine Information hinsichtlich der relativen Position des Objektes. Dementsprechend wird die Sicherheit bei der Erfassung von Objekten durch das Verfahren erhöht. Der Fahrer erhält zusätzliche Informationen, welche bei bisher bekannten Verfahren zum Betreiben von Fahrzeugumfeldüberwachungssystemen mit akustischer Signalerzeugung nicht realisierbar waren.

Nach einer vorteilhaften Ausgestaltung des erfindungsgemäßen Verfahrens wird als erstes akustisches Signal eine Tonfolge erzeugt und als zweites akustisches Signal eine Sprachausgabe. Hierdurch wird vermieden, dass der Fahrer Schwierigkeiten hat, die Signale voneinander zu trennen und die richtigen Schlüsse zu ziehen. Auch bei erhöhtem Geräuschpegel kann der Fahrer klar unterscheiden, welches der Signale den Abstand zum Objekt und welches die relative Position desselben in Bezug auf das Fahrzeug wiedergibt.

Nach einer weiteren vorteilhaften Ausgestaltung des erfindungsgemäßen Verfahrens werden das erste und das zweite akustische Signal simultan erzeugt. Durch diese Überlagerung der beiden Signale erhält der Fahrer ohne Verzögerung gleichzeitig beide Informationen, die für ein sicheres Umsteuern eines störenden Objektes erforderlich sind: die relative Position und den absoluten Abstand zu dem Objekt. Der Fahrer wird durch die Warnung durch das Warnsignal mit seinem Blick nicht von der Straße abgelenkt, wie es zum Beispiel bei grafischen Systemen zur Signalerzeugung bei Fahrzeugumfeldüberwachungssystemen der Fall ist. Dadurch, dass die gesamte Aufmerksamkeit des Fahrers in Fahrzeugrichtung gerichtet sein kann, wird die Sicherheit mit dem erfindungsgemäßen Verfahren erhöht.

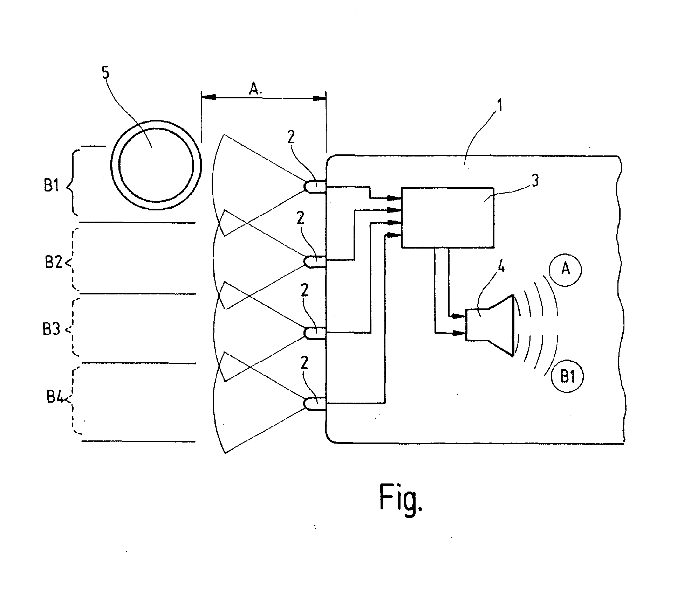

Weitere Merkmale, vorteilhafte Ausgestaltungen und Einzelheiten der Erfindung sind der nachfolgenden Beschreibung zu entnehmen, in welcher die Erfindung anhand des in der Zeichnung dargestellten Ausführungsbeispiels näher beschrieben und erläutert ist.

In der Figur ist ein Fahrzeug 1 schematisch von oben dargestellt, welches an einer Fahrzeug-Rückseite vier Sensoren 2 aufweist. Die Sensoren 2 erfassen den nicht sichtbaren Nahbereich an der Fahrzeug-Rückseite jeweils mit einem durch die Erfassungskegel dargestellten Sensorbereich und können zum Beispiel Radar-Sensoren oder Ultraschall-Sensoren sein. Das Fahrzeugumfeldüberwachungssystem der Erfindung umfasst ferner ein Steuer- und/oder Regelgerät 3, welches von den Sensoren 2 ein Signal erhält bei Erfassung eines Objektes im Nahbereich. Die von den Sensoren 2 erhaltenen Werte werden in dem Steuer- und/oder Regelgerät 3 ausgewertet und weiterverarbeitet zur Erzeugung eines Warnsignals durch einen Signalgeber 4. Erfindungsgemäß kann mit dem Fahrzeugumfeldüberwachungssystem ein erstes akustisches Signal A erzeugt werden, das den relativen Abstand zu einem erfassten Objekt 5 angibt, und ein zweites akustische Signal B1, welches die Position des erfassten Objektes in Bezug auf das Fahrzeug angibt. Der Signalgeber 4 ist ein akustischer Signalgeber und kann zum Beispiel die Lautsprecheranlage eines Fahrzeuges sein oder eine getrennte akustische Signalerzeugungseinrichtung. In dem in der Figur dargestellten Ausführungsbeispiel ist hinten links im Bereich des obersten Sensors 2 ein Pfosten als störendes Objekt 5 detektiert worden. Die durch die Sensoren 2 an das Steuer- und/oder Regelgerät 3 weitergegebenen Werte werden so weiterverarbeitet, dass einerseits ein erstes akustisches Signal A erzeugt wird und ein zweites akustisches Signal B1. Das erste akustische Signal A gibt den Abstand des Fahrzeuges zu dem störenden Objekt 5 wieder. Dies erfolgt beispielsweise durch die Geschwindigkeit einer zeitlichen Aufeinanderfolge von einem Signalwarnton. Bei Näherkommen wird diese Geschwindigkeit erhöht und bei einem Entfernen des Fahrzeuges von dem Objekt 5 reduziert. Das zweite akustische Signal B1 ist zum Beispiel eine Sprachausgabe und gibt an, an welcher Stelle bzw. welcher Position sich das Objekt 5 relativ zu dem Fahrzeug 1 befindet. In dem in der Figur dargestellten Ausführungsbeispiel befindet sich hinten links ein Pfosten oder dergleichen als störendes Objekt 5. Dementsprechend wird durch das Steuer- und/oder Regelgerät 3 des Fahrzeugumfeldüberwachungssystems eine akustische Ausgabe in dem Signalgeber 4 erzeugt, welche zum Beispiel eine Sprachausgabe ist, die lautet: "HINTEN - LINKS" oder "VORSICHT OBJEKT HINTEN - LINKS". In dem dargestellten Ausführungsbeispiel sind vier Sensoren 2 vorgesehen und jeweils vier Bereiche B1 bis B4, die durch eine differenzierte Sprachausgabe als Positionsbereiche unterscheidbar sind. Selbstverständlich ist diese Anzahl nicht beschränkend, und es können auch weniger oder mehr Sensoren und/oder Bereiche vorgesehen sein. Außerdem ist es auch möglich, für das erste akustische Signal und das zweite akustische Signal jeweils getrennte Signalgeber 4 zu verwenden, die auch unterschiedlich im Fahrzeug positioniert sein können. Des Weiteren kann das Fahrzeugumfeldüberwachungssystem der Erfindung mit zusätzlichen Einrichtungen kombiniert werden, zum Beispiel einer optischen Signalerzeugung in Form eines blinkenden Warnlichtes oder dergleichen.

Sämtliche in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Fahrzeugumfeldüberwachungssystem zur Überwachung des Nahbereichs eines Fahrzeuges (1), mit den Nahbereich des Fahrzeuges (1) erfassenden Sensoren (2), mit einem die von den Sensoren (2) erfassten Werte auswertenden Steuer- und/oder Regelgerät (3) und mit mindestens einem von dem Steuer- und/oder Regelgerät (3) ansteuerbaren Signalgeber (4) zur Erzeugung eines Warnsignals, **dadurch gekennzeichnet, dass** der Signalgeber (4) ein akustischer Signalgeber ist und dass mit dem Steuer- und/oder Regelgerät (3) ein erstes akustisches Signal (A) zum Angeben des relativen Abstandes zu einem erfassten Objekt (5) und ein zweites akustisches Signal (B1) zum Angeben der Position des erfassten Objekts in Bezug auf das Fahrzeug (1) erzeugbar sind.

2. Fahrzeugumfeldüberwachungssystem nach Anspruch 1, **dadurch gekennzeichnet, dass** das erste akustische Signal (A) eine Folge eines Warnsignaltons ist und das zweite akustische Signal (B1) eine Sprachausgabe ist.

3. Fahrzeugumfeldüberwachungssystem nach Anspruch 1 oder 2, **dadurch gekennzeichnet, dass** das erste akustische Signal (A) und das zweite akustische Signal (B1) simultan erzeugbar sind.

4. Fahrzeugumfeldüberwachungssystem nach einem der vorherigen Ansprüche, **dadurch gekennzeichnet, dass** in dem Steuer- und/oder Regelgerät (3) standardisierte Sprachausgaben für die relative Position des Objektes zum Fahrzeug (1) gespeichert sind.

5. Fahrzeugumfeldüberwachungssystem nach einem der Ansprüche 2 bis 4, **dadurch gekennzeichnet, dass** die Sprachausgabe des zweiten akustischen Signals (B1) aus der Angabe einer Fahrzeugseite und/oder eines Bereichs der Fahrzeugseite besteht.

6. Fahrzeugumfeldüberwachungssystem nach einem der vorherigen Ansprüche, **dadurch gekennzeichnet, dass** zur Angabe des Abstands zu dem Objekt das erste akustische Signal (A) als eine zeitliche Abfolge zwischen mehreren aufeinanderfolgenden Warnsignaltönen erzeugbar ist.

7. Verfahren zum Betreiben eines Fahrzeugumfeldüberwachungssystems eines Fahrzeugs (1) mit einem Steuerund/oder Regelgerät (3) mittels welchem von Sensoren (2) erfasste Werte ausgewertet werden und ein akustischer Signalgeber (4) angesteuert wird zum Erzeugen eines Warnsignals (A, B1), **dadurch gekennzeichnet, dass** ein erstes akustisches Signal (A) erzeugt wird zum Angeben des relativen Abstands eines detektierten Objekts (5) zum Fahrzeug (1) und ein zweites akustisches Signal (B1) erzeugt wird zum Angeben der Position des Objekts (5) in Bezug auf das Fahrzeug (1).

8. Verfahren nach Anspruch 7, **gekennzeichnet durch** Erzeugen einer Tonfolge als erstes akustisches Signal (A) und Erzeugen einer Sprachausgabe als zweites akustisches Signal (B1).

9. Verfahren nach Anspruch 7 oder 8, **gekennzeichnet durch** simultanes Erzeugen des ersten (A) und des zweiten (B1) akustischen Signals.
